# EUROPEAN PATENT SPECIFICATION

(11) **EP 2 633 768 B1**
(45) Date of publication and mention of the grant of the patent: **17.12.2014**
(21) Application number: 13156075.7
(22) Date of filing: 21.02.2013
(51) Int. Cl.: A23N 17/00

(54) **Device for mixing material and method for using such a device**
Vorrichtung zum Mischen von Material und Verfahren zum Betreiben einer solchen Vorrichtung
Appareil pour mélanger un produit et procédé pour utiliser un tel appareil

(30) Priority: 29.02.2012 NL 2008383
(43) Date of publication of application: 04.09.2013
(73) Proprietor: PEETERS LANDBOUWMACHINES B.V., 4879 NE Etten-Leur (NL)
(72) Inventor: Peeters, Daniel Petrus Marie, 2920 NIEUWMOER-KALMTHOUT (BE)
(74) Representative: Algemeen Octrooi- en Merkenbureau B.V.

(56) References cited:
- EP-A1- 2 218 704
- WO-A1-98/03080
- DE-A1-102007 015 981
- DE-U1-202005 003 070

## Description

The invention relates to a device for mixing material, comprising a mixing container having a bottom and a vertical wall, at least one mixing element provided in the mixing container and drive means for driving said at least one mixing element.

Such a device is described in German publication DE 20 2005 003 070 U1. The device in question is used in the mixing and reducing of vegetable products for preparing said material for being supplied to a fermentation plant. In addition to that, devices as described in the introduction are also used in the production of cattle feed. Such devices may form part of an automated feeding system.

The above-described device as used in the fermentation process has the drawback that the efficiency with which the mixing device can be used is not optimal. This is connected with the fact that filling the container of the mixing device takes some time and that the mixing process is stopped or at least slowed down during that time. Filling the mixing container can for example be done from a truck provided with a loading space fitted with a moving floor. Reference is made in this regard to the German publication DE 10 2007 015 981 A1. Another drawback that is to be considered is the fact that the consequence of increasing the volume of the mixing container, which may for example be desirable in order to make unmanned loading of a fermentation plant from the mixing device for a prolonged period of time possible, is that the required power of the drive means, which usually comprise electric motors in practice, will increase. As a result, a substantial part of the energetic advantage that can be realised with the fermentation process is undone again. Moreover, higher-power drive means are more expensive to buy, which has a negative effect on the cost price.

The latter problem with regard to the required power of the drive means also plays a part when mixing devices are used for producing cattle feed. When such a device is used, an amount of material is introduced into the mixing container in advance by the cattle farmer. Said material is made up of various feed components, such as hay, straw, grass, maize, concentrate and brewery spent grain, for example, the total amount of which is geared to the need for cattle feed during the time the automated feeding system must subsequently be operative, for example in connection with temporary absence of the cattle farmer. During that time it may be desirable for the cattle to be fed a number of times. The cattle may comprise various types, such as calves and dairy cows. As soon as the cattle is to be fed a first time, the drive means will be automatically activated, so that the required mixing and reducing of the entire contents of the mixing container will take place, after which part of the mixed contents of the mixing container is discharged from the mixing container by conveying means and supplied to the cattle. The remaining part of the contents of the mixing container will be supplied to the cattle in a comparable manner at a later stage. A drawback of the procedure described above is that after mixing of the aforesaid remaining part of the contents of the mixing container has taken place and the cattle have been fed a first time, the feed tends to get heated, as a consequence of which the feed quality of the contents of the mixing container will deteriorate. Furthermore, no distinction can be made between various needs that may exist as regards the composition of the cattle feed among the various types of cattle, such as calves and dairy cows.

The object of the present invention is to solve or at least alleviate the aforesaid problem, whether or not in preferred embodiments thereof. In order to achieve that object, the mixing device according to the invention is **characterised in that** the device comprises a buffer container having a movable buffer bottom and a vertical buffer wall, which is disposed above said at least one mixing element, as well as further drive means for moving the buffer bottom between a closed position and an open position. The use of the buffer container comprising a buffer bottom that is movable between an open position and the closed position has the important advantage that, starting from the situation in which the buffer container is filled with material that lies on the buffer bottom, filling the mixing container can take place very quickly by opening the buffer bottom, as a result of which the contents of the buffer container will fall into the mixing container. Filling the buffer container can take place whilst another amount of material is being mixed in the mixing container by said at least one mixing element, or whilst material mixed by said at least one mixing element is being discharged from the mixing container. Because of the invention, there will be less need for mixing containers having a relatively large volume, so that also the required power levels of the drive means can remain within bounds. Because of the invention, however, unmanned operation of mixing devices for a relatively long period of time is nevertheless possible. Specifically for use in automated feeding systems, the present invention further makes it possible to prepare different cattle feed compositions geared to the needs of different types of cattle.

In order to have the opening and closing of the buffer bottom take up as little time as possible, it is preferable if the buffer bottom comprises at least two movable bottom parts, wherein the movement the individual bottom parts must make for fully opening the buffer bottom, and thus the time needed for fully opening the buffer bottom as well as the dimensions of the bottom parts can remain within bounds.

A constructionally advantageous embodiment is obtained if the buffer bottom is slidable between the closed position and the open position. Thus, the space directly above or below the buffer bottom in the closed position will not be used by the buffer bottom, either, while the latter is being opened.

The device is in that case preferably provided with guide members extending at least on the outer side of the buffer wall for guiding the buffer bottom.

Alternatively it is also possible to configure the buffer bottom as a pivotable buffer bottom. Thus, opening the buffer bottom completely can take place very quickly by (temporarily) releasing the locking engagement that keeps the buffer bottom in the closed position, as a result of which the buffer bottom will pivot down from the closed position to the open position under the influence of the weight of the material that rests on the buffer bottom.

For reasons of constructional simplicity it is highly advantageous if the vertical wall and the vertical buffer wall are made up of a common wall. The vertical wall and the vertical buffer wall are directly contiguous to each other in that case, and the transition between the vertical wall and the vertical buffer wall is located at the buffer bottom. An additional advantage is that it can thus be easily arranged for the contents of the mixing container to be shut off by closing the buffer bottom, so that any odour nuisance and heating will be kept within bounds.

The invention can be used advantageously in particular if said at least one mixing element comprises a mixing auger which is rotatable about a vertical axis of rotation or mixing augers which are rotatable about respective vertical axes of rotation. Said mixing augers may also be provided with cutting blades for reducing the material while it is being mixed.

In particular, but not exclusively, when used in an automated feeding system it may be advantageous if the device is provided with at least one further buffer container above the buffer container, each further buffer container having a movable further buffer bottom. Thus a stack of buffer containers is provided, as it were. Each buffer container can be filled with an amount of material to be mixed which is to be supplied to a specific group of cattle at a specific moment.

The invention further relates to a method for using a device according to the invention as discussed in the foregoing. The method according to the invention comprises the steps of:
A mixing a first amount of material in the mixing container,
B filling the buffer container, with the buffer bottom in the closed position, with a second amount of material to be mixed by said at least one auger in the mixing container,
C discharging at least part of the mixed first amount of material from the mixing container after or during step A,
D opening the buffer bottom after steps B and C, so that the second amount of material will fall from the buffer container into the mixing container,
E closing the buffer bottom after step D.

The advantages of the invention as discussed in the foregoing are obtained in particular if the device is used according to such a method.

The efficiency with which the device is used will increase in particular if step B is carried out simultaneously with step A.

For use in automated feeding system it is preferable, in those cases in which it is desirable that different types of cattle are fed different feed compositions, that the composition of the first amount of material is different from that of a second amount of material. For calves, for example, the optimum cattle feed may be composed of grass, hay and maize (possibly of a slightly inferior quality), whilst the optimum composition for dairy cows is grass, maize and concentrate.

The invention will now be explained in more detail by means of a description of a preferred embodiment of the present invention, which must not be interpreted as being limitative to the invention, in which is reference is made to the following figures:
Figures 1a and 1b schematically show, in top plan view and in vertical sectional view, respectively, a preferred embodiment of a device according to the invention, with the buffer bottom in the closed position;
Figures 2a and 2b schematically show, in top plan view and in vertical sectional view, respectively, the device according to figures 1a and 1b, with the buffer bottom in the open position. In contrast to figures 1a, 1b and 2b, the mixing device shown in figure 2a is empty.

The mixing device 1 comprises a common mixing container 2, which is made up of a mixing container 3 at the bottom side and a buffer container 4 directly above said mixing container. The mixing container 3 has a fixed, flat bottom 14 having an oval circumferential edge, against which the vertical wall 5 of the mixing container 3 abuts. The vertical wall 5 is inclined outward, seen from the bottom.

The buffer container 4 has a movable buffer bottom 6, whose circumference abuts the upper circumferential edge of the vertical wall 5, and against which the vertical buffer wall 7 of the buffer container 4 abuts. The vertical wall 5 and the buffer wall 7 are in line with each other; they are actually formed by a common vertical wall. The volumes of the mixing container 3 and the buffer container 4 are about the same.

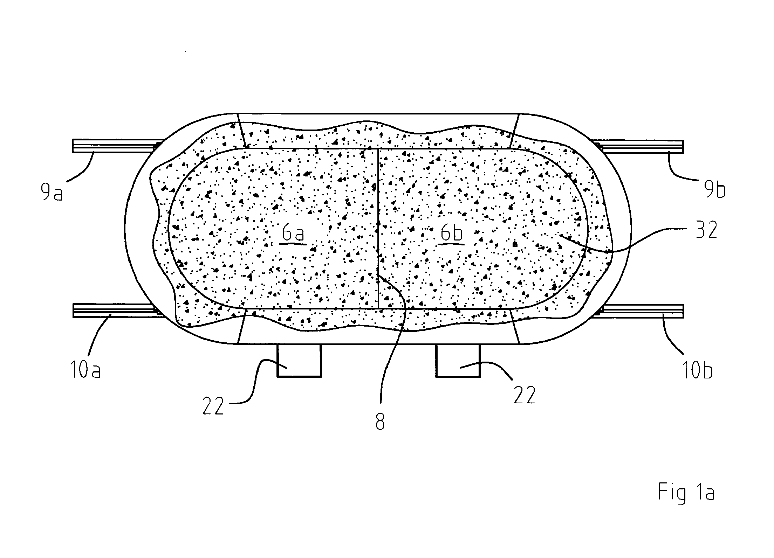

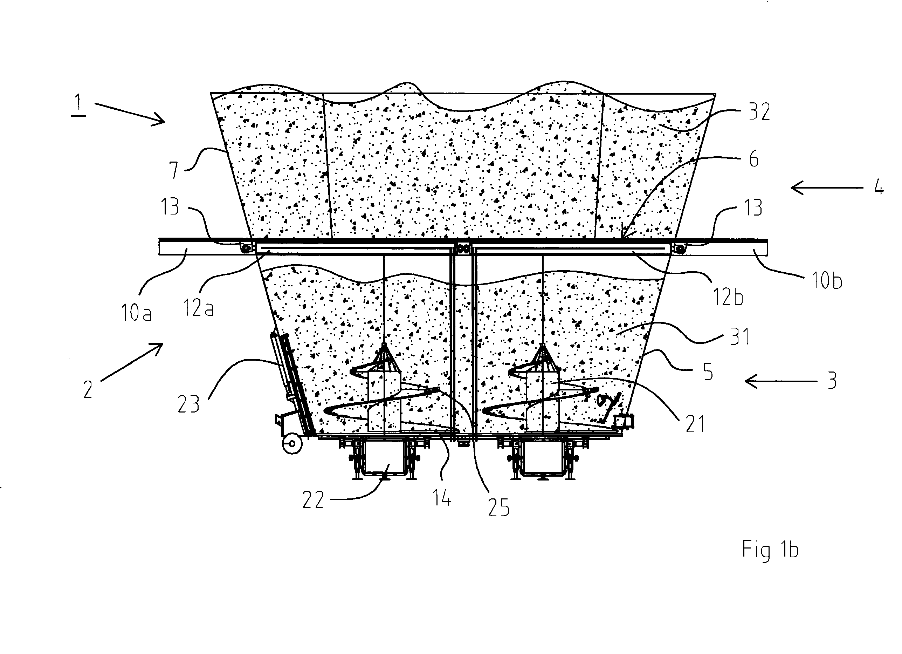

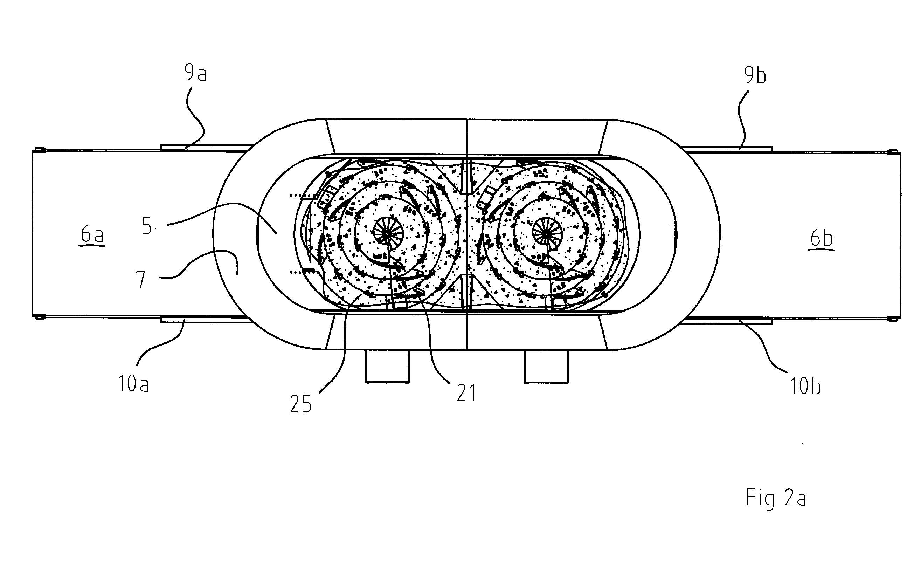

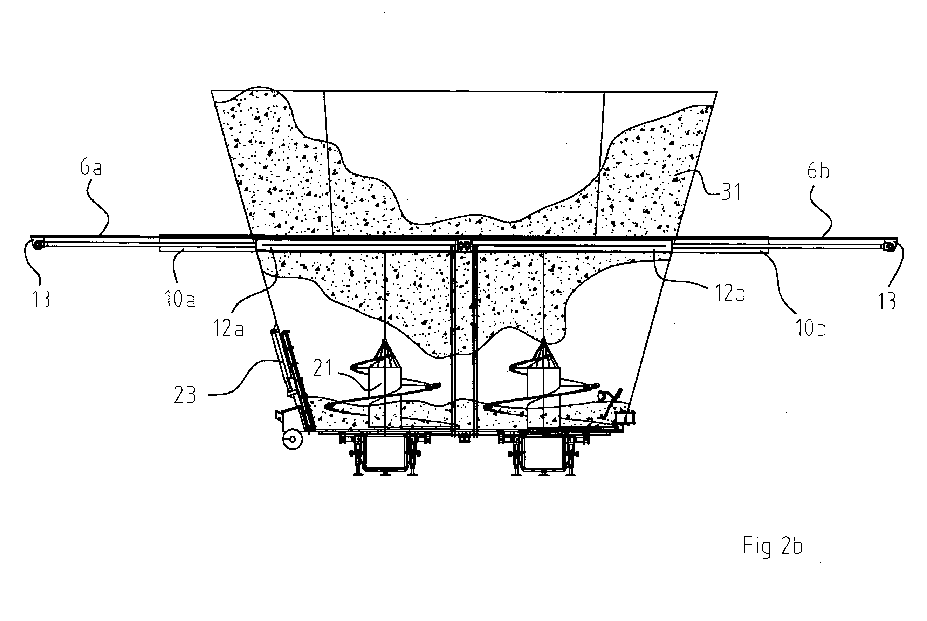

The buffer bottom 6 comprises two buffer bottom parts 6a, 6b which can move in horizontal direction away from and toward each other and which abut against each other at the location indicated by line 8 in the closed position. To enable said movement of the buffer bottom parts 6a, 6b, longitudinal guides 9a, 10a and 9b, 10b are provided on either side of each of the buffer bottom part 6a, 6b for guiding cooperation with opposed longitudinal edges of the respective associated buffer bottom part 6a, 6b. Furthermore, hydraulic cylinders 11 a, 12a and 11 b, 12b are provided on either side of each of the buffer bottom part 6a, 6b, of which cylinders the cylinders 11a, 11b are not visible in the figures. The end of the piston rod of the respective cylinders 11a-12b is connected to the associated buffer bottom part 6a, 6b via connecting parts 13. By suitably actuating the hydraulic cylinders 11a-12b, which as a rule will take place simultaneously, the buffer bottom part 6a, 6b can be moved between the closed position shown in figures 1a and 1b and the open position shown in figures 2a and 2b, during which movement the buffer bottom parts are guided by the longitudinal guides 9a-10b.

The mixing device 1 comprises two vertical augers 21 for mixing the contents of the mixing container 3, which augers can be rotatably driven by respective drive units 22 about a vertical axis of rotation that coincides with the central axis of the augers 21. The drive units 21 comprise electric motors (not shown). The augers 21 comprise cutting blades 25 on the outer side of the helix for reducing material in the mixing container 3. In the vertical wall 5, a hatch 23 is provided in a part thereof that joins the bottom 14, which hatch can be opened as soon as the contents of the mixing container 3 are sufficiently mixed as a result of the action of the augers 21. Subsequently, the mixed contents of the mixing container 3 can be discharged from the mixing container 3 via the opening thus formed in the vertical wall 5, as known to the skilled person. It is also possible to discharge the mixed contents through an opening in the bottom. This latter method is frequently used in biogas (fermentation) plants.

The mixing device 1 can be used as follows: starting from the situation in which the mixing container 3 is empty, at least for the greater part, the hatch 23 is closed, the buffer bottom 6 is closed and the buffer container 4 has been filled with a first amount of material 31 via the open upper side of the buffer container 4 in a previous stage, said first amount of material 31 is deposited into the mixing container 3 from the buffer container 4 by opening the buffer bottom 6. This is schematically indicated in figure 2b. Once the buffer container 4 has been filled with the first amount of material 31, which can take place in a relatively very short time, the buffer bottom 6 is closed again. The drive unit 21 is activated, so that the augers 21 start rotating and the first amount of material 31 is mixed and reduced. The capacity of the mixing container, when used in combination with a fermentation plant, will generally be selected so that the volume of the mixing container 3 is sufficiently large for feeding the fermentation plant for 24 hours, for example by means of an elevating auger that extends between the mixing container and the fermentation plant. During said 24 hours, the augers 21 are driven, for example simultaneously with the elevation auger, or remain idle, depending on the demand from the fermentation plant.

Once the buffer bottom 4 is closed, and possibly simultaneously with the operation of the augers 21 for mixing and reducing the first amount of material 31, the buffer container 4 is filled with a second amount of material 32, for example by a loading machine, such as a shovel, which must to that end drive to and from a silo a number of times, or from a truck having a loading space fitted with a moving floor. Filling the buffer container 4 typically takes about 30 minutes, for example. Following that, the fermentation plant is in principle ready for unmanned operation for 48 hours. Once the mixing container 3 is empty after the first 24 hours, the control system of the fermentation plant will open the buffer bottom, so that the second amount of material 32 will fall into the mixing container 3 and thus "fuel" becomes available again for feeding the fermentation plant for 24 hours. An additional advantage of the fact that the mixing of material in the mixing container 3 takes place while the buffer bottom 6 is closed is that any odour nuisance that may occur upon mixing and reducing can be kept within bounds.

In the situation in which the mixing device is used in an automated feeding system, the mixing container 3 may at some point first be filled with a first amount of material via the opened buffer bottom 6, after which the buffer bottom 6 is closed and the buffer container 4 is filled with a second amount of material. The moment the cattle are to be fed a first time, the drive means 22 are temporarily activated and the contents of the mixing container 3 are mixed and reduced. Subsequently, the contents of the mixing container are discharged from the mixing container 3 via the hatch 23 and supplied to the cattle by means of a conveyor. The moment the cattle are to be fed a second time, the buffer bottom 6 is opened (this could also take place at an earlier stage, but in any case not before the mixed contents of the mixing container 3 have been discharged therefrom for the first time), so that the contents of the buffer container 4 fall into the mixing container 3. Subsequently, mixing/reducing and discharging of the contents of the mixing container 3 as described above can take place again. The composition of the initial contents of the buffer container 4 may be different from the composition of the initial contents of the mixing container 3, and the cattle feed prepared on the basis of the respective contents can be supplied to different types of cattle. By stacking buffer containers it becomes possible to realise an even greater differentiation of cattle feed as far as the composition thereof and/or the moment of production thereof is/are concerned.

Another possibility of generating cattle feeds of different composition is to discharge a first amount of material only partially from the mixing container 3 after mixing/reducing has taken place and to mix the remaining part with material of a different composition from the buffer container 4.

## Claims

1. A device for mixing material, comprising a mixing container having a bottom and a vertical wall, at least one mixing element provided in the mixing container and drive means for driving said at least one mixing element, **characterised in that** the device comprises a buffer container having a movable buffer bottom and a vertical buffer wall, which is disposed above said at least one mixing element, as well as further drive means for moving the buffer bottom between a closed position and an open position.

2. A device according to claim 1, **characterised in that** the buffer bottom comprises at least two movable bottom parts.

3. A device according to claim 1 or 2, **characterised in that** the buffer bottom is movable between the closed position and the open position.

4. A device according to claim 3, **characterised in that** the device is provided with guide members extending at least on the outer side of the buffer wall for guiding the buffer bottom.

5. A device according to claim 1 or 2, **characterised in that** the buffer bottom is pivotable between the closed position and the open position.

6. A device according to any one of the preceding claims, **characterised in that** the vertical wall and the vertical buffer wall are made up of a common vertical wall.

7. A device according to any one of the preceding claims, **characterised in that** said at least one mixing element comprises a mixing auger which is rotatable about a vertical axis of rotation.

8. A device according to any one of the preceding claims, **characterised in that** said at least one mixing element comprises a number of mixing augers which are rotatable about respective vertical axes of rotation.

9. A device according to any one of the preceding claims, **characterised in that** the device is provided with at least one further buffer container above the buffer container, each further buffer container having a movable further buffer bottom.

10. A method for using a device according to any one of the preceding claims, comprising the steps of:
A mixing a first amount of material in the mixing container,
B filling the buffer container, with the buffer bottom in the closed position, with a second amount of material.
C discharging at least part of the mixed first amount of material from the mixing container after or during step A,
D opening the buffer bottom after steps B and C, so that the second amount of material will fall from the buffer container into the mixing container,
E closing the buffer bottom after step D.

11. A method according to claim 10, wherein step B is carried out simultaneously with step A.

12. A method according to claim 10 or 11, wherein the composition of the first amount of material is different from that of the second amount of material.

## Patentansprüche

1. Vorrichtung zum Vermischen von Material, die einen Mischbehälter mit einem Boden und einer senkrechten Wand, mindestens ein im Mischbehälter vorgesehenes Mischelement und Antriebsmittel zum Antreiben des mindestens einen Mischelements aufweist, **dadurch gekennzeichnet, dass** die Vorrichtung einen Pufferbehälter mit einem beweglichen Pufferboden und einer senkrechten Pufferwand, der über dem mindestens einen Mischelement angeordnet ist, sowie weitere Antriebsmittel zum Bewegen des Pufferbodens zwischen einer geschlossenen Stellung und einer geöffneten Stellung aufweist.

2. Vorrichtung nach Anspruch 1, **dadurch gekennzeichnet, dass** der Pufferboden mindestens zwei bewegliche Bodenteile umfasst.

3. Vorrichtung nach Anspruch 1 oder 2, **dadurch gekennzeichnet, dass** der Pufferboden zwischen der geschlossenen Stellung und der geöffneten Stellung beweglich ist.

4. Vorrichtung nach Anspruch 3, **dadurch gekennzeichnet, dass** die Vorrichtung mit Führungselementen versehen ist, die sich zumindest an der Außenseite der Pufferwand zur Führung des Pufferbodens erstrecken.

5. Vorrichtung nach Anspruch 1 oder 2, **dadurch gekennzeichnet, dass** der Pufferboden zwischen der geschlossenen Stellung und der geöffneten Stellung schwenkbar ist.

6. Vorrichtung nach einem der vorhergehenden Ansprüche, **dadurch gekennzeichnet, dass** die senkrechte Wand und die senkrechte Pufferwand aus einer gemeinsamen senkrechten Wand bestehen.

7. Vorrichtung nach einem der vorhergehenden Ansprüche, **dadurch gekennzeichnet, dass** das mindestens eine Mischelement eine Mischschnecke aufweist, die um eine senkrechte Drehachse drehbar ist.

8. Vorrichtung nach einem der vorhergehenden Ansprüche, **dadurch gekennzeichnet, dass** das mindestens eine Mischelement mehrere Mischschnecken aufweist, die um entsprechende senkrechte Drehachsen drehbar sind.

9. Vorrichtung nach einem der vorhergehenden Ansprüche, **dadurch gekennzeichnet, dass** die Vorrichtung mit mindestens einem weiteren Pufferbehälter über dem Pufferbehälter ausgestattet ist, wobei jeder weitere Pufferbehälter einen beweglichen weiteren Pufferboden aufweist.

10. Verfahren zur Verwendung einer Vorrichtung nach einem der vorhergehenden Ansprüche, das folgende Schritte umfasst:
A Mischen einer ersten Materialmenge in dem Mischbehälter,
B Füllen des Pufferbehälters mit einer zweiten Materialmenge, wobei sich der Pufferboden in der geschlossenen Stellung befindet,
C Entleeren mindestens eines Teils der gemischten ersten Materialmenge aus dem Mischbehälter nach oder während Schritt A,
D Öffnen des Pufferbodens nach den Schritten B und C, so dass die zweite Materialmenge aus dem Pufferbehälter in den Mischbehälter fällt,
E Schließen des Pufferbodens nach Anspruch D.

11. Verfahren nach Anspruch 10, bei dem Schritt B gleichzeitig mit Schritt A ausgeführt wird.

12. Verfahren nach Anspruch 10 oder 11, bei dem sich die Zusammensetzung der ersten Materialmenge von derjenigen der zweiten Materialmenge unterscheidet.

## Revendications

1. Dispositif pour mélanger un matériau, comprenant un récipient de mélange ayant un fond et une paroi verticale, au moins un élément de mélange prévu dans le récipient de mélange et des moyens d'entraînement pour entraîner au moins un élément de mélange, **caractérisé en ce que** le dispositif comprend un récipient tampon ayant un fond tampon mobile et une paroi tampon verticale, qui est disposée au-dessus dudit au moins un élément de mélange, ainsi que d'autres moyens d'entraînement pour déplacer le fond tampon entre une position fermée et une position ouverte.

2. Dispositif selon la revendication 1, **caractérisé en ce que** le fond tampon comprend au moins deux parties de fond mobiles.

3. Dispositif selon la revendication 1 ou 2, **caractérisé en ce que** le fond tampon est mobile entre la position fermée et la position ouverte.

4. Dispositif selon la revendication 3, **caractérisé en ce que** le dispositif est prévu avec les éléments de guidage s'étendant au moins sur le côté externe de la paroi tampon pour guider le fond tampon.

5. Dispositif selon la revendication 1 ou 2, **caractérisé en ce que** le fond tampon peut pivoter entre la position fermée et la position ouverte.

6. Dispositif selon l'une quelconque des revendications précédentes, **caractérisé en ce que** la paroi verticale et la paroi tampon verticale sont composées d'une paroi verticale commune.

7. Dispositif selon l'une quelconque des revendications précédentes, **caractérisé en ce que** ledit au moins un élément de mélange comprend une vis de mélange qui peut tourner autour d'un axe de rotation vertical.

8. Dispositif selon l'une quelconque des revendications précédentes, **caractérisé en ce que** ledit au moins un élément de mélange comprend un certain nombre de vis de mélange qui peuvent tourner autour des axes de rotation verticaux respectifs.

9. Dispositif selon l'une quelconque des revendications précédentes, **caractérisé en ce que** le dispositif est prévu avec au moins un récipient tampon supplémentaire au-dessus du récipient tampon, chaque récipient tampon supplémentaire ayant un fond tampon mobile supplémentaire.

10. Procédé pour utiliser un dispositif selon l'une quelconque des revendications précédentes, comprenant les étapes consistant à :
A. mélanger une première quantité de matériau dans le récipient de mélange,
B. remplir le récipient tampon, avec le fond tampon dans la position fermée, avec une seconde quantité de matériau,
C. décharger au moins une partie de la première quantité de matériau mélangée, du récipient de mélange après ou pendant l'étape A,
D. ouvrir le fond tampon après les étapes B et C, de sorte que la seconde quantité de matériau tombe du récipient tampon dans le récipient de mélange,
E. fermer le fond tampon après l'étape D.

11. Procédé selon la revendication 10, dans lequel l'étape B est réalisée simultanément avec l'étape A.

12. Procédé selon la revendication 10 ou 11, dans lequel la composition de la première quantité de matériau est différente de celle de la seconde quantité de matériau.
